(19) Europäisches Patentamt
European Patent Office
Office européen des brevets

(11) **EP 4 668 569 A1**

(12) **EUROPEAN PATENT APPLICATION**
published in accordance with Art. 153(4) EPC

(43) Date of publication:
**24.12.2025  Bulletin 2025/52**

(21) Application number: **24770938.9**

(22) Date of filing: **13.03.2024**

(51) International Patent Classification (IPC):
**H02P 9/04** (2006.01)     **B60L 7/14** (2006.01)
**B60L 9/18** (2006.01)     **B60L 50/10** (2019.01)

(52) Cooperative Patent Classification (CPC):
**B60L 7/14; B60L 9/18; B60L 50/10; H02P 9/04;
H02P 9/30**

(86) International application number:
**PCT/JP2024/009819**

(87) International publication number:
**WO 2024/190833 (19.09.2024 Gazette 2024/38)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **15.03.2023  JP 2023040345**

(71) Applicant: **Hitachi Construction Machinery Co.,
Ltd.
Tokyo 110-0015 (JP)**

(72) Inventors:
• **NISHIHAMA Kazuo
Tokyo 100-8280 (JP)**
• **MATSUO Kosuke
Tokyo 100-8280 (JP)**
• **KANEKO Satoru
Tokyo 100-8280 (JP)**
• **IKEGAMI Tokuma
Tsuchiura-shi, Ibaraki 300-0013 (JP)**
• **WATANABE Toshihiko
Tsuchiura-shi, Ibaraki 300-0013 (JP)**
• **ISHIDA Seiji
Tsuchiura-shi, Ibaraki 300-0013 (JP)**
• **ISHIDA Toshihiko
Tsuchiura-shi, Ibaraki 300-0013 (JP)**

(74) Representative: **Manitz Finsterwald
Patent- und Rechtsanwaltspartnerschaft mbB
Martin-Greif-Straße 1
80336 München (DE)**

(54) **POWER GENERATION SYSTEM USING INDUCTION GENERATOR**

(57)     An object of the present invention is to provide a power generation system that can decrease the capacity of a converter that supplies reactive power required for excitation and generation of leakage magnetic flux in a two-winding squirrel-cage induction generator. To this end, in a power generation system including an induction generator having a primary winding including a main winding and an auxiliary winding, and a secondary conductor, a diode bridge that is connected to the main winding and converts AC power generated in the main winding to DC power, and a converter that is connected to the auxiliary winding, excites the induction generator, and converts an AC voltage generated in the auxiliary winding to a DC voltage, a capacitor that is connected to the primary winding of the induction generator and supplies reactive power to the induction generator is included, and the capacitor is connected to the main winding in parallel to the diode bridge.

[FIG. 2]

## Description

Technical Field

The present invention relates to a power generation system using a two-winding squirrel-cage induction generator having a primary winding including a main winding and an auxiliary winding, and a secondary conductor.

Background Art

A power generation system using a two-winding squirrel-cage induction generator having a primary winding including a main winding and an auxiliary winding, and a secondary conductor is known. This power generation system is applied to a drive system for an electrically driven vehicle, and the like. For example, Patent Document 1 exists as a prior art document that discloses such a drive system.

The following drive system is described in Patent Document 1. The drive system includes an induction generator (two-winding squirrel-cage induction generator) having a primary winding including a main winding and an auxiliary winding, an inverter for travelling that supplies power to a motor for travelling, an inverter for auxiliary machinery that supplies power to a motor for auxiliary machinery, a rectifier (diode bridge) having an AC-side terminal connected to the main winding and a DC-side terminal connected to the inverter for travelling, and a converter for power generation having an AC-side terminal connected to the auxiliary winding and a DC-side terminal connected to the inverter for auxiliary machinery.

Prior Art Document

Patent Document

Patent Document 1: JP-7082700-B

Summary of the Invention

Problem to be Solved by the Invention

In the power generation system using the two-winding squirrel-cage induction generator, the main winding or the auxiliary winding is required to be excited by a converter. The converter is more expensive than the diode bridge. Thus, as in Patent Document 1, the converter is connected to the auxiliary winding, the output power (active power) of which is approximately one digit lower than that of the main winding, and the diode bridge is connected to the main winding. However, power required for excitation and generation of leakage magnetic flux (reactive power) depends on the output power of the whole of the two-winding squirrel-cage induction generator. Thus, high reactive power relative to the output power of the auxiliary winding side (active power) is required to be supplied from the converter. For this reason, there is a problem that the capacity of the converter becomes high.

The present invention has been made in view of the above-described problem, and an object thereof is to provide a power generation system that can decrease the capacity of a converter that supplies reactive power required for excitation and generation of leakage magnetic flux in a two-winding squirrel-cage induction generator.

Means for Solving the Problem

In order to achieve the above-described object, in the present invention, in a power generation system including an induction generator having a primary winding including a main winding and an auxiliary winding and a secondary conductor, a rectifier that is connected to the main winding and converts alternating-current power generated in the main winding to direct-current power, and a converter that is connected to the auxiliary winding, excites the induction generator, and converts an alternating-current voltage generated in the auxiliary winding to a direct-current voltage, a capacitor that is connected to the primary winding of the induction generator and supplies reactive power to the induction generator is included, and the capacitor is connected to the main winding in parallel to the diode bridge.

Further, in the present invention, in a power generation system including an induction generator having a primary winding including a main winding and an auxiliary winding and a secondary conductor, a rectifier that is connected to the main winding and converts alternating-current power generated in the main winding to direct-current power, and a converter that is connected to the auxiliary winding, excites the induction generator, and converts an alternating-current voltage generated in the auxiliary winding to a direct-current voltage, a capacitor that is connected to the primary winding of the induction generator and supplies reactive power to the induction generator is included, and the capacitor is connected to the auxiliary winding in parallel to the converter.

Advantages of the Invention

According to the present invention, the reactive power required for excitation and generation of leakage magnetic flux in the two-winding squirrel-cage induction generator can be supplied from the capacitor. Thus, the capacity of the converter can be made low.

Brief Description of the Drawings

[Fig. 1] Fig. 1 is a side view schematically depicting appearance of an electrically driven dump truck in which a power generation system according to a first embodiment of the present invention is mounted.
[Fig. 2] Fig. 2 is a configuration diagram of a drive system mounted in the electrically driven dump truck according to the first embodiment of the present invention.
[Fig. 3] Fig. 3 is a side view and a sectional view depicting a structure of a two-winding squirrel-cage induction generator.
[Fig. 4] Fig. 4 is a diagram depicting a relationship between the auxiliary winding voltage and the power generation frequency of the two-winding squirrel-cage induction generator in each operation mode of the electrically driven dump truck.
[Fig. 5] Fig. 5 is a diagram depicting flows of active power and reactive power in the power generation system according to the first embodiment of the present invention.
[Fig. 6] Fig. 6 is a diagram indicating specifications demanded for the two-winding squirrel-cage induction generator according to the first embodiment of the present invention.
[Fig. 7] Fig. 7 is a diagram depicting a relationship between an auxiliary winding current and capacitor capacitance in each operation mode of the electrically driven dump truck according to the first embodiment of the present invention.
[Fig. 8] Fig. 8 is a diagram depicting the capacitance of a capacitor and a relationship between generator capacity in traction rated operation and the capacitor capacitance according to the first embodiment of the present invention.
[Fig. 9] Fig. 9 is a diagram indicating specifications demanded for the two-winding squirrel-cage induction generator according to a second embodiment of the present invention.
[Fig. 10] Fig. 10 is a diagram depicting a relationship between the auxiliary winding current and the capacitor capacitance in each operation mode of the electrically driven dump truck according to the second embodiment of the present invention.
[Fig. 11] Fig. 11 is a diagram depicting a relationship between the auxiliary winding current and the capacitor capacitance in each operation mode of the electrically driven dump truck according to a modification of the second embodiment of the present invention.
[Fig. 12] Fig. 12 is a configuration diagram of the drive system mounted in the electrically driven dump truck according to a third embodiment of the present invention.
[Fig. 13] Fig. 13 is a configuration diagram of the drive system mounted in the electrically driven dump truck according to a fourth embodiment of the present invention.
[Fig. 14] Fig. 14 is a configuration diagram of the drive system mounted in the electrically driven dump truck according to a fifth embodiment of the present invention.
[Fig. 15] Fig. 15 is a configuration diagram of the drive system mounted in the electrically driven dump truck according to a sixth embodiment of the present invention.

Modes for Carrying Out the Invention

Embodiments of the present invention are described below with reference to the drawings. In the respective diagrams, an equivalent element is given the same numeral and overlapping description is omitted as appropriate.

[First Embodiment]

A description is given by taking a power generation system mounted in an electrically driven dump truck as an example of a power generation system according to a first embodiment of the present invention. The power generation system according to the present invention can be applied also to another electrically driven vehicle (for example, electrically driven wheel loader).

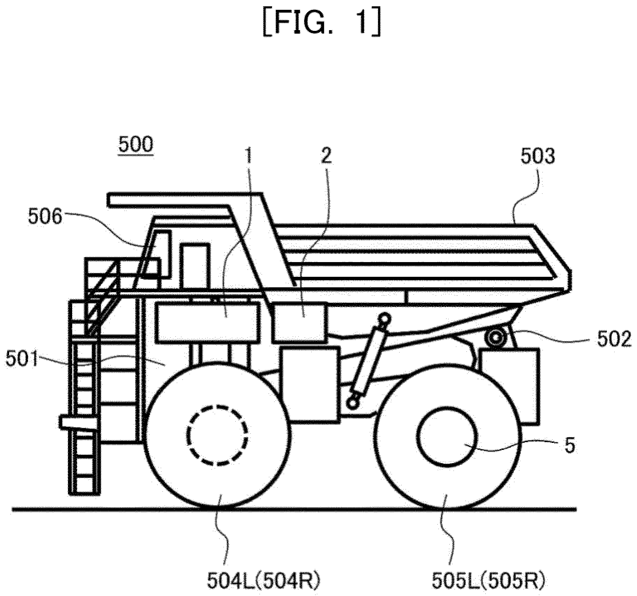

Fig. 1 is a side view schematically depicting appearance of the electrically driven dump truck in which the power generation system according to the first embodiment is mounted. In Fig. 1, an electrically driven dump truck 500 includes a vehicle body frame 501 that extends in a front-rear direction and forms a support structure, a body (vessel) 503 that is disposed to extend in the front-rear direction over the vehicle body frame 501 and has a rear end lower portion disposed on the vehicle body frame 501 with the interposition of a pin joining portion 502 in such a manner as to be capable of inclining, a pair of driven wheels 504L and 504R disposed on the left and the right on the lower front side of the vehicle body frame 501, a pair of drive wheels 505L and 505R disposed on the left and the right on the lower rear side of the vehicle body, an operation seat 506 disposed on the upper front side of the vehicle body frame 501, a prime mover 1 as a power source disposed on the vehicle body frame 501, a two-winding squirrel-cage induction generator (hereinafter, induction generator, as appropriate) 2 driven by the prime mover 1, and a travelling motor 5 that drives wheels (drive wheels 505L and 505R) by using power output from the induction generator 2. In Fig. 1, only the wheels on one side among the pair of left and right driven wheels 504L and 504R and the pair of left and right drive wheels 505L and 505R are depicted. Concerning the wheels on the other side, only numerals in brackets are indicated in the diagram, and depiction is omitted.

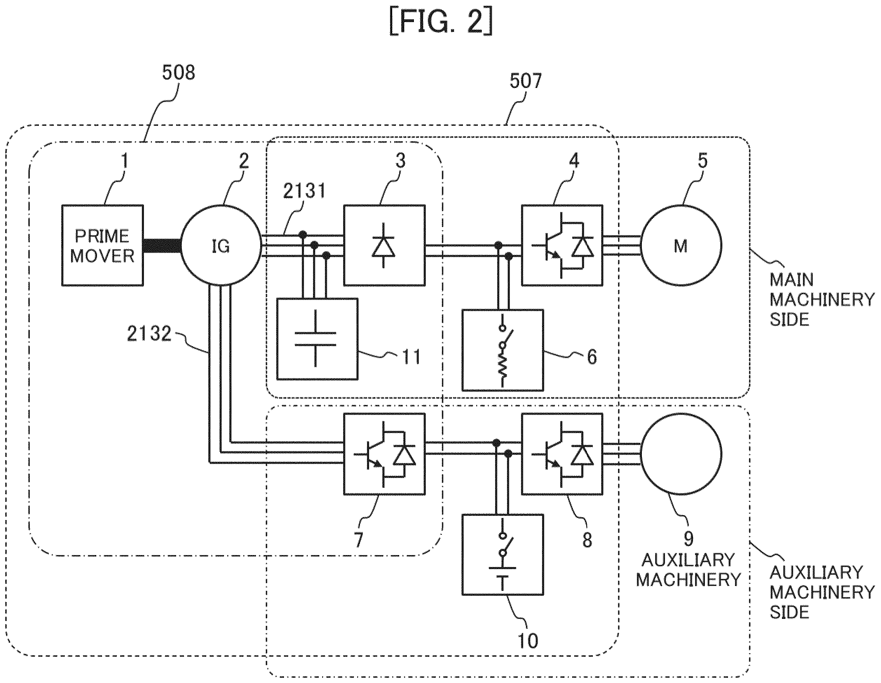

Fig. 2 is a configuration diagram of a drive system mounted in the electrically driven dump truck 500 according to the first embodiment. In Fig. 2, a drive system 507 includes the prime mover 1, the induction generator 2 driven by the prime mover 1, a starting battery 10 that starts the induction generator 2, a travelling inverter 4 that supplies power to the travelling motor 5, an auxiliary machinery inverter 8 that supplies power to an auxiliary machinery motor 9, a diode bridge 3 as a rectifier, a regenerative discharge resistor 6, a converter 7, and a capacitor 11. The induction generator 2 has a primary winding including a main winding 2131 and an auxiliary winding 2132, and a secondary conductor. A power generation system 508 according to the present embodiment is configured by the prime mover 1, the induction generator 2, the diode bridge 3, the converter 7, and the capacitor 11. A thyristor or a transistor may be used as the rectifier instead of the diode bridge 3.

An AC-side terminal of the diode bridge 3 is connected to the main winding 2131 of the induction generator 2 and the capacitor 11, and a DC-side terminal of the diode bridge 3 is connected to the travelling inverter 4 and the regenerative discharge resistor 6. The regenerative discharge resistor 6 is connected to the DC-side terminal of the diode bridge 3 and a DC-side terminal of the travelling inverter 4 in regenerative operation of the travelling motor 5 (in retard operation), and discharges power generated by the regenerative operation of the travelling motor 5. A power system on the main machinery side (side of the diode bridge 3, high-capacity side) is configured by the diode bridge 3, the travelling inverter 4, the travelling motor 5, the regenerative discharge resistor 6, and the capacitor 11.

An AC-side terminal of the converter 7 is connected to the auxiliary winding 2132 of the induction generator 2, and a DC-side terminal of the converter 7 is connected to the auxiliary machinery inverter 8 and the starting battery 10. The starting battery 10 is connected to the converter 7 at the time of activation of the induction generator 2, and supplies power to the converter 7. A power system on the auxiliary machinery side (converter side, low-capacity side) is configured by the converter 7, the auxiliary machinery inverter 8, the auxiliary machinery motor 9, and the starting battery 10. If the capacitor 11 is disposed on the converter side, a large current occurs every time switching of the converter 7 is executed. However, the current is suppressed by disposing the capacitor 11 on the side of the diode bridge 3 as in the present embodiment.

Reactive power required for excitation and generation of leakage magnetic flux in the induction generator 2 is supplied from the capacitor 11 to the main winding 2131. Therefore, reactive power required to be supplied from the converter 7 becomes low, and the capacity of the converter 7 can be made low.

In idling operation, a state in which the electrically driven dump truck 500 is stopped is made. The mechanical output power of the prime mover 1 is converted to AC power by the auxiliary winding 2132 of the induction generator 2, and the magnitude of the voltage and the frequency concerning the AC power obtained by the conversion are controlled by the converter 7. In the idling operation, in a case of a state in which the travelling inverter 4 is opened, a state in which power is not supplied from the main winding 2131 to the diode bridge 3 is made. Meanwhile, the state in which the reactive power is supplied from the capacitor 11 to the main winding 2131 is made. Thus, the reactive power required to be supplied from the converter 7 becomes low, and the capacity of the converter 7 can be made low.

In traction operation, a state in which an accelerator pedal of the electrically driven dump truck 500 is pressed is made, the output power of the prime mover 1 is converted to AC power also by the main winding 2131 of the induction generator 2 besides being converted to AC power by the auxiliary winding 2132 of the induction generator 2 similarly to the case of the idling operation, and the magnitude of the voltage and the frequency concerning the AC power obtained by the conversion are controlled by the converter 7. In the traction operation, in a case of a state in which the travelling inverter 4 is energized, a state in which the reactive power is supplied from the capacitor 11 to the main winding 2131 while power is supplied from the main winding 2131 to the diode bridge 3 is made. Therefore, the reactive power required to be supplied from the converter 7 becomes low, and the capacity of the converter 7 can be made low.

In the retard operation, a state in which a brake pedal of the electrically driven dump truck 500 is pressed is made, the mechanical output power of the prime mover 1 is converted to AC power by the auxiliary winding 2132 of the induction generator 2 similarly to the case of the idling operation, and the magnitude of the voltage and the frequency concerning the AC power obtained by the conversion are controlled by the converter 7. Moreover, AC power regenerated by the travelling motor 5 is converted to DC power by the travelling inverter 4, and the magnitude of the voltage concerning the DC power obtained by the conversion is controlled by the travelling inverter 4 such that a voltage in the reverse direction is generated in the diode bridge 3. Thus, the state in which power is not supplied from the main winding 2131 to the diode bridge 3 is made. Meanwhile, the state in which the reactive power is supplied from the capacitor 11 to the main winding 2131 is made. Thus, the reactive power required to be supplied from the converter 7 becomes low, and the capacity of the converter 7 can be made low.

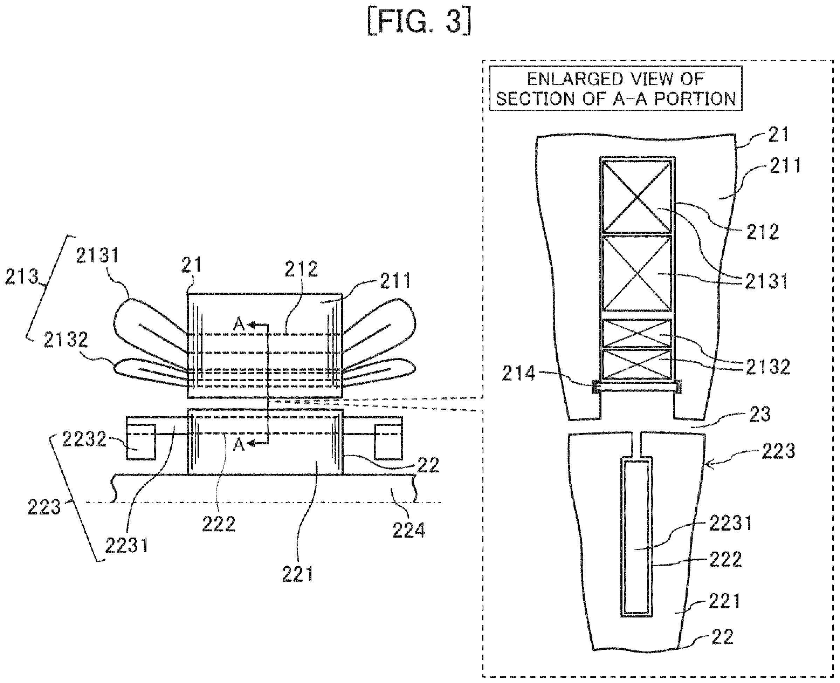

Fig. 3 is a side view and a sectional view depicting a structure of the two-winding squirrel-cage induction generator 2. The induction generator 2 includes a stator 21 and a rotor 22. In the stator 21, a primary winding 213 is set in a stator slot 212 formed by a stator iron core 211, and the primary winding 213 has the main winding 2131 and the auxiliary winding 2132. The primary winding 213 is held in the stator slot 212 by a wedge 214. In the rotor 22, a rotor bar 2231 is set in a rotor slot 222 formed by a rotor iron core 221, and end portions of the rotor bar 2231 are short-circuited by end rings 2232. A secondary conductor 223 has the rotor bar 2231 and the end rings 2232. A gap 23 is an air gap between the stator 21 and the rotor 22.

When the voltage of the auxiliary winding 2132 is changed by the converter 7, the amount of magnetic flux passing through the stator iron core 211 and the rotor iron core 221 changes, and the quantity of magnetic flux interlinked with the main winding 2131 changes. Thus, the voltage of the main winding 2131 can be changed, and be controlled to become a voltage demanded by the travelling inverter 4.

When the frequency of the auxiliary winding 2132 is changed by the converter 7, the slip changes, and the current of the secondary conductor 223 changes. Thus, power output from the main winding 2131 and the auxiliary winding 2132 can be changed, and be controlled to become power demanded by the travelling inverter 4 and the auxiliary machinery inverter 8.

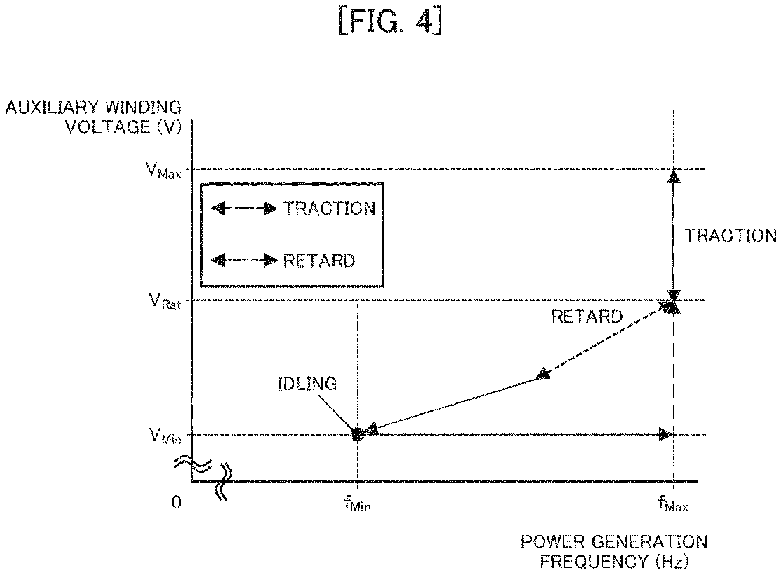

Fig. 4 is a diagram depicting a relationship between the auxiliary winding voltage and the power generation frequency of the two-winding squirrel-cage induction generator 2 in each operation mode of the electrically driven dump truck 500. In Fig. 4, a vertical axis indicates the auxiliary winding voltage, and a horizontal axis indicates the power generation frequency. The auxiliary winding voltage is the effective value of the line voltage of the auxiliary winding 2132 of the induction generator 2. The operation modes of the electrically driven dump truck 500 include the idling operation, the retard operation, and the traction operation.

In the idling operation, the mechanical output power of the prime mover 1 is low. Thus, the rotation speed is set low to enhance the efficiency of the prime mover 1. The power generation frequency is low because the rotation speed is low. The voltage that can be generated becomes low when the power generation frequency is low. The auxiliary winding voltage in the idling operation is defined as $V_{Min}$, and the power generation frequency at this time is defined as $f_{Min}$.

In the traction operation, the mechanical output power of the prime mover 1 is high, and thus the rotation speed at which the efficiency of the prime mover 1 becomes favorable becomes high. The power generation frequency is high because the rotation speed is high. The voltage that can be generated becomes high when the power generation frequency is high. A maximum auxiliary winding voltage, a rated auxiliary winding voltage, and the power generation frequency in the traction operation are defined as $V_{max}$, $V_{Rat}$, and $f_{Max}$. respectively.

In the retard operation, the mechanical output power of the prime mover 1 is low similarly to that in the idling operation. However, the rotation speed of the prime mover 1 is higher than that in the idling operation in order for quick switching to the traction operation to be possible. The power generation frequency is higher because the rotation speed is higher than that in the idling operation. The voltage that can be generated becomes higher because the power generation frequency is higher than that in the idling operation.

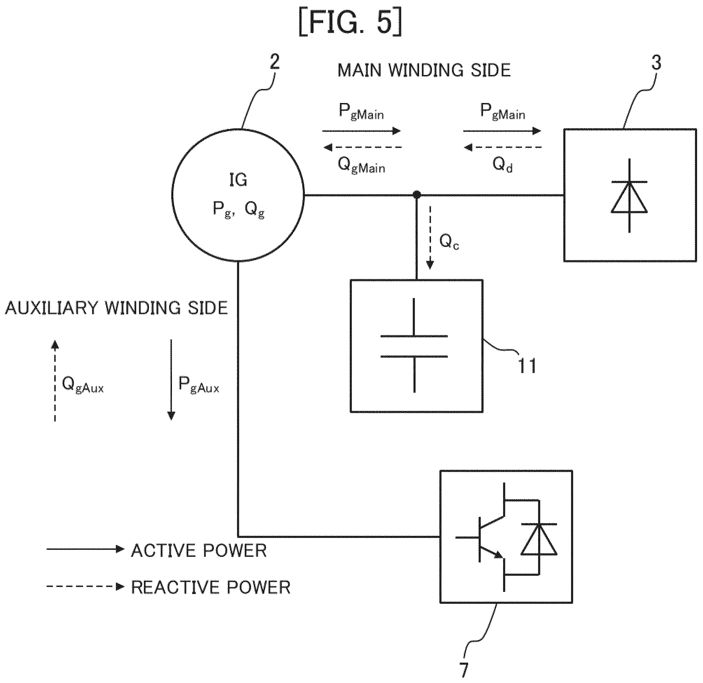

Fig. 5 is a diagram depicting flows of active power and reactive power in the power generation system 508. In Fig. 5, concerning positive and negative signs of the reactive power, the positive sign is given in a case in which the current is delayed relative to the voltage and the negative sign is given in a case in which the current is advanced relative to the voltage, as viewed from the generator side and the capacitor side.

As the reactive power, reactive power required for excitation and generation of leakage magnetic flux in the induction generator 2 is defined as $Q_g$. Reactive power supplied to the main winding 2131 of the induction generator 2 is defined as $Q_{gMain}$. Reactive power supplied to the auxiliary winding 2132 of the induction generator 2 is defined as $Q_{gAux}$. Reactive power supplied to the capacitor 11 is defined as $Q_c$. Reactive power generated from the diode bridge 3 is defined as $Q_d$. The reactive power $Q_{gAux}$ is supplied from the converter 7 to the auxiliary winding 2132 of the induction generator 2 such that these kinds of reactive power balance out.

When the output power (active power) of the auxiliary winding 2132 of the induction generator 2 is defined as $P_{gAux}$ and the auxiliary winding voltage is defined as $V_{Aux}$, an auxiliary winding current $I_{Aux}$ is represented by the following formula.

[Math. 1]

$$I_{Aux} = \sqrt{P_{gAux}{}^2 + Q_{gAux}{}^2} \Big/ \left(\sqrt{3}\ V_{Aux}\right)$$

The auxiliary winding current $I_{Aux}$ is the effective value of the line current of the auxiliary winding 2132 of the induction generator 2. When a maximum auxiliary winding current is defined as $I_{Max}$, capacity $S_{Conv}$ required for the converter 7 is represented by the following formula.

[Math. 2]

$$S_{Conv} = \sqrt{3}\ V_{Max} \times I_{Max}$$

In Math. 2, the maximum auxiliary winding voltage $V_{Max}$ in the traction operation is a specification given to the generator and has been determined. Thus, if the maximum auxiliary winding current $I_{Max}$ is known, the capacity $S_{Conv}$ required for the converter 7 is determined.

The reactive power $Q_g$ required for excitation and generation of leakage magnetic flux in the induction generator 2 is represented by the following formula.

[Math. 3]

$$Q_g = Q_{gMain} + Q_{gAux}$$

The reactive power $Q_d$ generated from the diode bridge 3 is represented by the following formula.

[Math. 4]

$$Q_d = Q_{gMain} + Q_c$$

When Math. 4 is subtracted from Math. 3, the following formula is obtained.

[Math. 5]

$$Q_g - Q_d = Q_{gAux} - Q_c$$

From Math. 5, the reactive power $Q_{gAux}$ supplied to the auxiliary winding 2132 of the induction generator 2 is represented by the following formula.

[Math. 6]

$$Q_{gAux} = Q_g - Q_d + Q_c$$

When a main winding voltage, a power generation angular frequency, and the capacitance of the capacitor 11 are defined as $V_{Main}$, $\omega$, and C, respectively, the reactive power $Q_c$ supplied to the capacitor 11 is represented by the following formula.

[Math. 7]

$$Q_c = -\ V_{Main}{}^2 \times \omega \times C$$

When the ratio of the auxiliary winding voltage to the main winding voltage is defined as $K_V$, the auxiliary winding voltage $V_{Aux}$ is represented by the following formula.

[Math. 8]

$$V_{Aux} = K_V \times V_{Main}$$

In the following, a calculation formula of the auxiliary winding current $I_{Aux}$ in each operation mode is derived.

First, a calculation formula concerning a rated state in the traction operation (in traction rated operation) is derived. When the rated capacities of the main winding 2131 and the auxiliary winding 2132 of the induction generator 2 are defined as $S_{gMainRat}$ and $S_{gAuxRat}$, respectively, and the rated power factors of them are defined as $P_{FgMainRat}$ and $P_{FgAuxRat}$, respectively, reactive power $Q_{gTR}$ required for excitation and generation of leakage magnetic flux in the induction generator 2 in the rated state in the traction operation is represented by the following formula.

[Math. 9]

$$Q_{gTR} = \sqrt{S_{gMainRat}^2 - (PF_{gMainRat} \times S_{gMainRat})^2}$$
$$+ \sqrt{S_{gAuxRat}^2 - (PF_{gAuxRat} \times S_{gAuxRat})^2}$$

When the output power (active power) of the main winding 2131 of the induction generator 2 and the rated power factor of the diode bridge 3 in the rated state in the traction operation are defined as $P_{gMainTR}$ and $P_{FdRat}$, respectively, reactive power $Q_{dTR}$ generated from the diode bridge 3 in the rated state in the traction operation is represented by the following formula.

[Math. 10]

$$Q_{dTR} = -\sqrt{(P_{gMainTR} / PF_{dRat})^2 - (P_{gMainTR})^2}$$

In general, the power factor of the diode bridge 3 is set to 0.955, and the reactive power $Q_{dTR}$ generated from the diode bridge 3 in the rated state in the traction operation is represented by the following formula.

[Math. 11]

$$Q_{dTR} = -\sqrt{(P_{gMainTR} / 0.955)^2 - (P_{gMainTR})^2}$$

When Math. 11 is rearranged, the reactive power $Q_{dTR}$ generated from the diode bridge 3 in the rated state in the traction operation is represented by the following formula.

[Math. 12]

$$Q_{dTR} = -0.31 \times P_{gMainTR}$$

When a main winding voltage in the rated state in the traction operation is defined as $V_{MainTR}$ and a power generation angular frequency in the rated state in the traction operation is defined as $\omega_{TR}$, reactive power $Q_{cTR}$ supplied to the capacitor 11 in the rated state in the traction operation is represented by the following formula.

[Math. 13]

$$Q_{cTR} = -V_{MainTR}^2 \times \omega_{TR} \times C$$

An auxiliary winding voltage $V_{AuxTR}$ in the rated state in the traction operation is represented by the following formula.

[Math. 14]

$$V_{AuxTR} = K_V \times V_{MainTR} = V_{Rat}$$

From Math. 6, reactive power $Q_{gAuxTR}$ supplied to the auxiliary winding 2132 of the induction generator 2 in the rated state in the traction operation is represented by the following formula.

[Math. 15]

$$Q_{gAuxTR} = Q_{gTR} - Q_{dTR} + Q_{cTR}$$

By substituting Math. 9, Math. 12, and Math. 13 for $Q_{gTR}$, $Q_{dTR}$, and $Q_{cTR}$, respectively, in Math. 15, the reactive power $Q_{gAuxTR}$ supplied to the auxiliary winding 2132 of the induction generator 2 in the rated state in the traction operation is obtained.

When the output power (active power) of the auxiliary winding 2132 of the induction generator 2 in the rated state in the traction operation is defined as $P_{gAuxTR}$, an auxiliary winding current $I_{AuxTR}$ in the rated state in the traction operation is represented by the following formula from Math. 1.

[Math. 16]

$$I_{AuxTR} = \sqrt{P_{gAuxTR}^2 + Q_{gAuxTR}^2} \Big/ \left( \sqrt{3}\ V_{AuxTR} \right)$$

By substituting Math. 15 and Math. 14 for $Q_{gAuxTR}$ and $V_{AuxTR}$, respectively, in Math. 16, the auxiliary winding current $I_{AuxTR}$ in the rated state in the traction operation is obtained.

Next, a calculation formula concerning a no-load state in the traction operation (in traction no-load operation) is derived. When a main winding voltage in the no-load state in the traction operation is defined as $V_{MainTN}$, a power generation angular frequency in the no-load state in the traction operation is defined as $\omega_{TN}$, and the excitation inductance of the induction generator 2 is defined as $L_M$, reactive power $Q_{gTN}$ required for excitation of the induction generator 2 in the no-load state in the traction operation is represented by the following formula.

[Math. 17]

$$Q_{gTN} = V_{MainTN}^2 \Big/ \left( \omega_{TN} \times L_M \right)$$

An auxiliary winding voltage $V_{AuxTN}$ in the no-load state in the traction operation is represented by the following formula.

[Math. 18]

$$V_{AuxTN} = K_V \times V_{MainTN} = V_{Max}$$

The power generation angular frequency $\omega_{TN}$ in the no-load state in the traction operation is represented by the following formula.

[Math. 19]

$$\omega_{TN} = \omega_{TR}$$

When a no-load current when the main winding voltage is $V_{MainTN}$ is defined as $I_{MainNL}$, the excitation inductance $L_M$ of the induction generator 2 is represented by the following formula.

[Math. 20]

$$L_M = V_{MainTN} / (\sqrt{3} \times \omega_{TN} \times I_{MainNL})$$

In the no-load state in the traction operation, a state in which the travelling inverter 4 is opened is made. Thus, reactive power is not generated from the diode bridge 3. Therefore, reactive power $Q_{dTN}$ generated from the diode bridge 3 in the no-load state in the traction operation is represented by the following formula.

[Math. 21]

$$Q_{dTN} = 0$$

Reactive power $Q_{cTN}$ supplied to the capacitor 11 in the no-load state in the traction operation is represented by the following formula.

[Math. 22]

$$Q_{cTN} = - V_{MainTN}^2 \times \omega_{TN} \times C$$

From Math. 6, reactive power $Q_{gAuxTN}$ supplied to the auxiliary winding 2132 of the induction generator 2 in the no-load state in the traction operation is represented by the following formula.

[Math. 23]

$$Q_{gAuxTN} = Q_{gTN} - Q_{dTN} + Q_{cTN}$$

By substituting Math. 17, Math. 21, and Math. 22 for $Q_{gTN}$, $Q_{dTN}$, and $Q_{cTN}$, respectively, in Math. 23, the reactive power $Q_{gAuxTN}$ supplied to the auxiliary winding 2132 of the induction generator 2 in the no-load state in the traction operation is obtained.

When the output power (active power) of the auxiliary winding 2132 of the induction generator 2 in the no-load state in the traction operation is defined as $P_{gAuxTN}$, an auxiliary winding current $I_{AuxTN}$ in the no-load state in the traction operation is represented by the following formula.

[Math. 24]

$$I_{AuxTN} = \sqrt{P_{gAuxTN}^2 + Q_{gAuxTN}^2} / (\sqrt{3} \ V_{AuxTN})$$

By substituting Math. 23 and Math. 18 for $Q_{gAuxTN}$ and $V_{AuxTN}$, respectively, in Math. 24, the auxiliary winding current $I_{AuxTN}$ in the no-load state in the traction operation is obtained.

Next, a calculation formula in the retard operation is derived. When a main winding voltage in the retard operation is defined as $V_{MainR}$ and a power generation angular frequency in the retard operation is defined as $\omega_R$, reactive power $Q_{gR}$ required for excitation of the induction generator 2 in the retard operation is represented by the following formula.

[Math. 25]

$$Q_{gR} = V_{MainR}^2 / (\omega_R \times L_M)$$

An auxiliary winding voltage $V_{AuxR}$ in the retard operation is represented by the following formula.

[Math. 26]

$$V_{AuxR} = K_V \times V_{MainR}$$

In the retard operation, control is executed by the travelling inverter 4 such that a voltage in the reverse direction is generated in the diode bridge 3. Thus, reactive power is not generated from the diode bridge 3. Therefore, reactive power $Q_{dR}$ generated from the diode bridge 3 in the retard operation is represented by the following formula.

[Math. 27]

$$Q_{dR} = 0$$

Reactive power $Q_{cR}$ supplied to the capacitor 11 in the retard operation is represented by the following formula.

[Math. 28]

$$Q_{cR} = -V_{MainR}^2 \times \omega_R \times C$$

When Math. 25, Math. 27, and Math. 28 are substituted for $Q_g$, $Q_d$, and $Q_c$, respectively, in Math. 6, reactive power $Q_{gAuxR}$ supplied to the auxiliary winding 2132 of the induction generator 2 in the retard operation is represented by the following formula.

[Math. 29]

$$Q_{gAuxR} = Q_{gR} - Q_{dR} + Q_{cR}$$

When the output power (active power) of the auxiliary winding 2132 of the induction generator 2 in the retard operation is defined as $P_{gAuxR}$ and Math. 26 is substituted for $V_{Aux}$ in Math. 1, an auxiliary winding current $I_{AuxR}$ in the retard operation is represented by the following formula.

[Math. 30]

$$I_{AuxR} = \sqrt{P_{gAuxR}^2 + Q_{gAuxR}^2} / (\sqrt{3} \times K_V \times V_{MainR})$$

In the retard operation, the main winding voltage $V_{MainR}$ is determined such that the auxiliary winding current $I_{AuxR}$ becomes the minimum. When both sides of Math. 30 are squared, the following formula is obtained.

[Math. 31]

$$I_{AuxR}^2 = (P_{gAuxR}^2 + Q_{gAuxR}^2) / (\sqrt{3} \times K_V \times V_{MainR})^2$$

When Math. 29 is substituted into Math. 31, the following formula is obtained.

[Math. 32]

$$I_{AuxR}^2 = (P_{gAuxR}^2 + (Q_{gR} - Q_{dR} + Q_{cR})^2) / (\sqrt{3} \times K_V \times V_{MainR})^2$$

When Math. 25, Math. 27, and Math. 28 are substituted into Math. 32, the following formula is obtained.

[Math. 33]

$$I_{AuxR}^2 = (P_{gAuxR}^2 + (V_{MainR}^2 / (\omega_R \times L_M) - V_{MainR}^2 \times \omega_R \times C)^2)$$

$$/ (\sqrt{3} \times K_V \times V_{MainR})^2$$

$$= (P_{gAuxR}^2 + (V_{MainR}^2 \times (1 / (\omega_R \times L_M) - \omega_R \times C))^2)$$

$$/ (\sqrt{3} \times K_V \times V_{MainR})^2$$

$$= P_{gAuxR}^2 / (\sqrt{3} \times K_V \times V_{MainR})^2$$

$$+ (V_{MainR}^2 \times (1 / (\omega_R \times L_M) - \omega_R \times C))^2 / (\sqrt{3} \times K_V \times V_{MainR})^2$$

$$= (P_{gAuxR} / (\sqrt{3} \times K_V))^2 / V_{MainR}^2$$

$$+ (V_{MainR}^4 \times (1 / (\omega_R \times L_M) - \omega_R \times C)^2) / (\sqrt{3} \times K_V \times V_{MainR})^2$$

$$= (P_{gAuxR} / (\sqrt{3} \times K_V))^2 / V_{MainR}^2$$

$$+ (V_{MainR}^2 \times (1 / (\omega_R \times L_M) - \omega_R \times C)^2) / (\sqrt{3} \times K_V)^2$$

$$= (P_{gAuxR} / (\sqrt{3} \times K_V))^2 / V_{MainR}^2$$

$$+ V_{MainR}^2 \times ((1 / (\omega_R \times L_M) - \omega_R \times C) / (\sqrt{3} \times K_V))^2$$

$$= a^2 / V_{MainR}^2 + b^2 \times V_{MainR}^2$$

$$= (a / V_{MainR})^2 + (b \times V_{MainR})^2$$

a and b in Math. 33 are represented by the following formulas.

[Math. 34]

$$a = P_{gAuxR} / (\sqrt{3} \times K_V)$$

[Math. 35]

$$b = (1 / (\omega_R \times L_M) - \omega_R \times C) / (\sqrt{3} \times K_V)$$

In Math. 33, $a/V_{MainR}$ is infinity when $V_{MainR}$ is 0, and $b \times V_{MainR}$ is infinity when $V_{MainR}$ is infinity. Thus, a minimal value exists in $I_{AuxR}^2$ in a range of $V_{MinR}$ from 0 to infinity. When Math. 33 is differentiated with respect to $V_{MainR}^2$, the following formula is obtained.

[Math. 36]

$$\frac{d{I_{AuxR}}^2}{d{V_{MainR}}^2} = -a^2 \diagup {V_{MainR}}^4 + b^2$$

$I_{AuxR}^2$ becomes the minimal value when Math. 36 becomes 0. $V_{MainR}^2$ when $I_{AuxR}^2$ becomes the minimal value is represented by the following formula.

[Math. 37]

$$0 = -a^2 \diagup {V_{MainR}}^4 + b^2$$

$$a^2 \diagup {V_{MainR}}^4 = b^2$$

$$ {V_{MainR}}^4 = a^2 \diagup b^2$$

$$ {V_{MainR}}^2 = a \diagup b$$

When Math. 34 and Math. 35 are substituted for a and b, respectively, in Math. 37, $V_{MainR}^2$ when $I_{AuxR}^2$ becomes the minimal value is represented by the following formula.

[Math. 38]

$${V_{MainR}}^2 = P_{gAuxR} \diagup (\sqrt{3} \times K_V)$$

$$\diagup ((1 \diagup (\omega_R \times L_M) - \omega_R \times C) \diagup (\sqrt{3} \times K_V))$$

$$= P_{gAuxR} \diagup ((1 \diagup (\omega_R \times L_M) - \omega_R \times C))$$

When the right side of Math. 38 is a positive number, $V_{MainR}$ when $I_{AuxR}^2$ becomes the minimal value is represented by the following formula.

[Math. 39]

$$V_{MainR} = \sqrt{\frac{P_{gAuxR}}{\frac{1}{\omega_R \times L_M} - \omega_R \times C}}$$

When the right side of Math. 38 is a negative number, $V_{MainR}$ when $I_{AuxR}^2$ becomes the minimal value is represented by the following formula.

[Math. 40]

$$V_{MainR} = \sqrt{-\frac{P_{gAuxR}}{\frac{1}{\omega_R \times L_M} - \omega_R \times C}}$$

When Math. 37 is substituted into Math. 33, the minimal value of $I_{AuxR}^2$ is represented by the following formula.

[Math. 41]

$$I_{AuxR}^2 = a^2 / (a / b) + (a / b) \times b^2$$
$$= 2ab$$

When Math. 34 and Math. 35 are substituted for a and b, respectively, in Math. 41, the minimal value of $I_{AuxR}^2$ is represented by the following formula.

[Math. 42]

$$I_{AuxR}^2 = 2 \times (P_{gAuxR} / (\sqrt{3} \times K_V))$$
$$\times ((1 / (\omega_R \times L_M) - \omega_R \times C) / (\sqrt{3} \times K_V))$$
$$= 2 \times P_{gAuxR} \times (1 / (\omega_R \times L_M) - \omega_R \times C) / (3 K_V^2)$$

When the right side of Math. 42 is a positive number, the minimal value of $I_{AuxR}$ is represented by the following formula.

[Math. 43]

$$I_{AuxR} = \sqrt{\frac{2}{3}} \sqrt{\frac{P_{gAuxR}\left(\frac{1}{\omega_R \times L_M} - \omega_R \times C\right)}{K_V}}$$

When the right side of Math. 42 is a negative number, the minimal value of $I_{AuxR}$ is represented by the following formula.

[Math. 44]

$$I_{AuxR} = \sqrt{\frac{2}{3}} \sqrt{\frac{P_{gAuxR}\left(\omega_R \times C - \frac{1}{\omega_R \times L_M}\right)}{K_V}}$$

When the magnetic flux density in the retard operation becomes higher than that in the no-load state in the traction operation, the auxiliary winding current $I_{AuxR}$ in the retard operation calculated with Math. 43 or Math. 44 is undervalued due to the influence of magnetic saturation. When the magnetic flux density in the retard operation becomes higher than that in the no-load state in the traction operation, the main winding voltage $V_{MainR}$ in the retard operation calculated with Math. 39 or Math. 40 is in a relationship of the following formula.

[Math. 45]

$$V_{MainR} > V_{MainTN} \times \omega_R / \omega_{TN}$$

When the main winding voltage $V_{MainR}$ in the retard operation calculated with Math. 39 or Math. 40 is in a relationship of Math. 45, the following formula is employed for the main winding voltage $V_{MainR}$ in the retard operation.

[Math. 46]

$$V_{MainR} = V_{MainTN} \times \omega_R / \omega_{TN}$$

When the main winding voltage $V_{MainR}$ in the retard operation calculated with Math. 39 or Math. 40 is in the relationship of Math. 45, Math. 46 is substituted for $V_{MainR}$ in Math. 33, and the following formula is obtained.

[Math. 47]

$$I_{AuxR}^2 = (a / (V_{MainTN} \times \omega_R / \omega_{TN}))^2 + (b \times (V_{MainTN} \times \omega_R / \omega_{TN}))^2$$

When the right side of Math. 47 is a positive number, the minimal value of $I_{AuxR}$ is represented by the following formula.

[Math. 48]

$$I_{AuxR} = \sqrt{\left(\frac{a}{V_{MainTN} \times \omega_R / \omega_{TN}}\right)^2 + \left(b \times V_{MainTN} \times \omega_R / \omega_{TN}\right)^2}$$

When the right side of Math. 47 is a negative number, the minimal value of $I_{AuxR}$ is represented by the following formula.

[Math. 49]

$$I_{AuxR} = \sqrt{-\left(\frac{a}{V_{MainTN} \times \omega_R / \omega_{TN}}\right)^2 - \left(b \times V_{MainTN} \times \omega_R / \omega_{TN}\right)^2}$$

Lastly, a calculation formula in the idling operation is derived. When a main winding voltage in the idling operation is defined as $V_{MainI}$ and a power generation angular frequency in the idling operation is defined as $\omega_I$, reactive power $Q_{gI}$ required for excitation of the induction generator 2 in the idling operation is represented by the following formula.

[Math. 50]

$$Q_{gI} = V_{MainI}^2 / (\omega_I \times L_M)$$

An auxiliary winding voltage $V_{AuxI}$ in the idling operation is represented by the following formula.

[Math. 51]

$$V_{AuxI} = K_V \times V_{MainI}$$

In the idling operation, in a case of a state in which the travelling inverter 4 is opened, reactive power is not generated from the diode bridge 3. Therefore, reactive power $Q_{dI}$ generated from the diode bridge 3 in the retard operation is represented by the following formula.

[Math. 52]

$$Q_{dI} = 0$$

Reactive power $Q_{cI}$ supplied to the capacitor 11 in the idling operation is represented by the following formula.

[Math. 53]

$$Q_{cI} = - V_{MainI}^2 \times \omega_I \times C$$

From Math. 6, reactive power $Q_{gAuxI}$ supplied to the auxiliary winding 2132 of the induction generator 2 in the idling operation is represented by the following formula.

[Math. 54]

$$Q_{gAuxI} = Q_{gI} - Q_{dI} + Q_{cI}$$

When the output power (active power) of the auxiliary winding 2132 of the induction generator 2 in the idling operation is defined as $P_{gAuxI}$ and Math. 51 is substituted for $V_{Aux}$ in Math. 1, an auxiliary winding current $I_{AuxI}$ in the idling operation is represented by the following formula.

[Math. 55]

$$I_{AuxI} = \sqrt{P_{gAuxI}{}^2 + Q_{gAuxI}{}^2} \Big/ (\sqrt{3} \times K_V \times V_{MainI})$$

Also in the idling operation, the main winding voltage $V_{MainI}$ is determined such that the auxiliary winding current $I_{AuxI}$ becomes the minimum similarly to the case of the retard operation. When both sides of Math. 55 are squared, the following formula is obtained.

[Math. 56]

$$I_{AuxI}{}^2 = (P_{gAuxI}{}^2 + Q_{gAuxI}{}^2) \Big/ (\sqrt{3} \times K_V \times V_{MainI})^2$$

When Math. 54 is substituted into Math. 56, the following formula is obtained.

[Math. 57]

$$I_{AuxI}{}^2 = (P_{gAuxI}{}^2 + (Q_{gI} - Q_{dI} + Q_{cI})^2) \Big/ (\sqrt{3} \times K_V \times V_{MainI})^2$$

When Math. 50, Math. 52, and Math. 53 are substituted into Math. 57, the following formula is obtained similarly to the case of the retard operation.

[Math. 58]

$$I_{AuxI}{}^2 = (a \Big/ V_{MainI})^2 + (b \times V_{MainI})^2$$

a and b in Math. 58 are represented by the following formulas.

[Math. 59]

$$a = P_{gAuxI} \Big/ (\sqrt{3} \times K_V)$$

[Math. 60]

$$b = (1 \Big/ (\omega_I \times L_M) - \omega_I \times C) \Big/ (\sqrt{3} \times K_V)$$

$V_{MainI}{}^2$ when $I_{AuxI}{}^2$ becomes a minimal value is represented by the following formula similarly to the case of the retard operation.

[Math. 61]

$$V_{MainI}{}^2 = P_{gAuxI} / ((1 / (\omega_I \times L_M) - \omega_I \times C))$$

When the right side of Math. 61 is a positive number, $V_{MainI}$ when $I_{AuxI}{}^2$ becomes the minimal value is represented by the following formula.

[Math. 62]

$$V_{MainI} = \sqrt{\dfrac{P_{gAuxI}}{\dfrac{1}{\omega_I \times L_M} - \omega_I \times C}}$$

When the right side of Math. 61 is a negative number, $V_{MainI}$ when $I_{AuxI}{}^2$ becomes the minimal value is represented by the following formula.

[Math. 63]

$$V_{MainI} = \sqrt{-\dfrac{P_{gAuxI}}{\dfrac{1}{\omega_I \times L_M} - \omega_I \times C}}$$

The minimal value of $I_{AuxI}{}^2$ is represented by the following formula similarly to the case of the retard operation.

[Math. 64]

$$I_{AuxI}{}^2 = 2 \times P_{gAuxI} \times (1 / (\omega_I \times L_M) - \omega_I \times C) / (3 K_V{}^2)$$

When the right side of Math. 64 is a positive number, the minimal value of $I_{AuwI}$ is represented by the following formula.

[Math. 65]

$$I_{AuxI} = \sqrt{\dfrac{2}{3}} \dfrac{\sqrt{P_{gAuxI}\left(\dfrac{1}{\omega_I \times L_M} - \omega_I \times C\right)}}{K_V}$$

When the right side of Math. 64 is a negative number, the minimal value of $I_{AuwI}$ is represented by the following formula.

[Math. 66]

$$I_{AuxI} = \sqrt{\dfrac{2}{3}} \dfrac{\sqrt{P_{gAuxI}\left(\omega_I \times C - \dfrac{1}{\omega_I \times L_M}\right)}}{K_V}$$

When the magnetic flux density in the idling operation becomes higher than that in the no-load state in the traction operation, the auxiliary winding current $I_{AuxI}$ in the idling operation calculated with Math. 65 or Math. 66 is undervalued due to the influence of magnetic saturation. When the magnetic flux density in the idling operation becomes higher than that in the no-load state in the traction operation, the main winding voltage $V_{MainI}$ in the idling operation calculated with Math. 62 or Math. 63 is in a relationship of the following formula.

[Math. 67]

$$V_{MainI} > V_{MainTN} \times \omega_I / \omega_{TN}$$

When the main winding voltage $V_{MainI}$ in the idling operation calculated with Math. 62 or Math. 63 is in a relationship of Math. 67, the following formula is employed for the main winding voltage $V_{MainI}$ in the idling operation.

$$[\text{Math. 68}]$$

$$V_{MainI} = V_{MainTN} \times \omega_I / \omega_{TN}$$

When the main winding voltage $V_{MainI}$ in the idling operation calculated with Math. 62 or Math. 63 is in the relationship of Math. 67, Math. 68 is substituted for $V_{MainI}$ in Math. 58, and the following formula is obtained.

$$[\text{Math. 69}]$$

$$I_{AuxI}^2 = (a / (V_{MainTN} \times \omega_I / \omega_{TN}))^2$$
$$+ (b \times (V_{MainTN} \times \omega_I / \omega_{TN}))^2$$

When the right side of Math. 69 is a positive number, the minimal value of $I_{AuwI}$ is represented by the following formula.

$$[\text{Math. 70}]$$

$$I_{AuxI} = \sqrt{\left(\frac{a}{V_{MainTN} \times \omega_I / \omega_{TN}}\right)^2 + \left(b \times V_{MainTN} \times \omega_I / \omega_{TN}\right)^2}$$

When the right side of Math. 69 is a negative number, the minimal value of $I_{AuwI}$ is represented by the following formula.

$$[\text{Math. 71}]$$

$$I_{AuxI} = \sqrt{-\left(\frac{a}{V_{MainTN} \times \omega_I / \omega_{TN}}\right)^2 - \left(b \times V_{MainTN} \times \omega_I / \omega_{TN}\right)^2}$$

An operation state in which the auxiliary winding current $I_{Aux}$ becomes the maximum can be grasped by the calculation formulas derived in the above-described manner, and the capacity $S_{Conv}$ required for the converter 7 is determined by substituting the auxiliary winding current $I_{Aux}$ at the time for $I_{Max}$ in Math. 2.

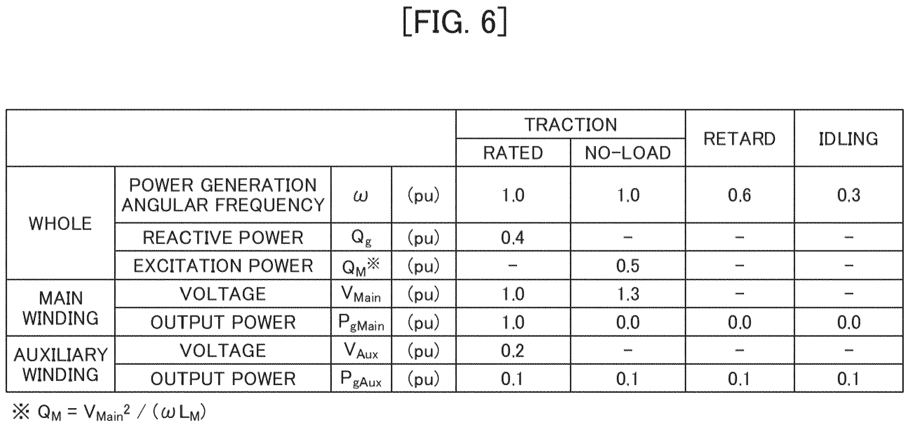

Fig. 6 is a diagram indicating specifications demanded for the two-winding squirrel-cage induction generator 2 according to the first embodiment. Fig. 6 represents, in a pu unit system, the power generation angular frequency, the reactive power and the excitation power required for the generator, and the voltage and the output power of the main winding 2131 and the auxiliary winding 2132 in the rated state and in the no-load state in the traction operation, in the retard operation, and in the idling operation. The rated power generation frequency, the rated output power, and the rated voltage of the main winding 2131 in the traction operation are employed as the basis (1.0 pu) of the pu unit system.

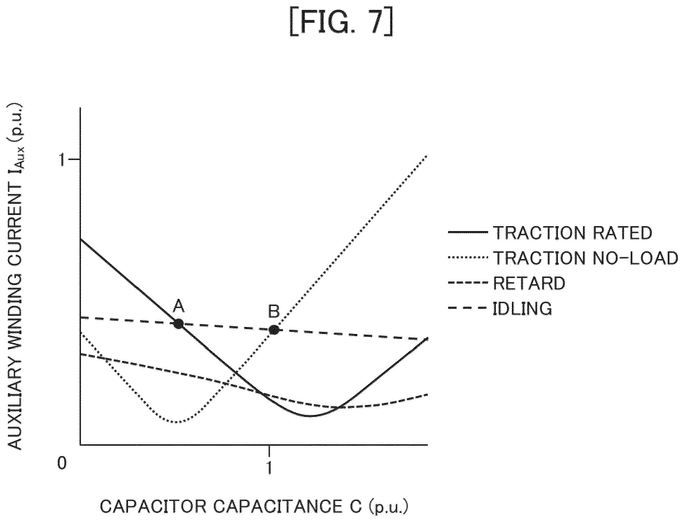

Fig. 7 is a diagram depicting a relationship between the auxiliary winding current $I_{Aux}$ and the capacitor capacitance in each operation mode of the electrically driven dump truck 500 according to the first embodiment. The auxiliary winding current $I_{Aux}$ is calculated by the following formulas: Math. 16 in the rated state in the traction operation; Math. 24 in the no-load state; Math. 43, Math. 48, and Math. 49 in the retard operation; and Math. 65 in the idling operation. For the auxiliary winding current $I_{Aux}$, a value obtained by converting the main winding current to the auxiliary winding side in a case in which the capacitor capacitance is 0 in the rated state in the traction operation is employed as the basis (1.0 pu) of the pu unit system. For the capacitor capacitance, capacitance with which the reactive power of the capacitor becomes 1.0 pu in the no-load state in the traction operation (operation state in which the reactive power of the capacitor becomes the maximum) is employed as the basis (1.0 pu) of the pu unit system.

When the capacitor capacitance is lower than that of point A, the auxiliary winding current $I_{Aux}$ in the rated state in the traction operation is the maximum auxiliary winding current $I_{Max}$. When the capacitor capacitance is that between point A and point B, the auxiliary winding current $I_{Aux}$ in the idling operation is the maximum auxiliary winding current $I_{Max}$. When the capacitor capacitance is higher than that of point B, the auxiliary winding current $I_{Aux}$ in the no-load state in the traction operation is the maximum auxiliary winding current $I_{Max}$.

The maximum auxiliary winding current $I_{Max}$ becomes the minimum at point B. Thus, the maximum auxiliary winding current $I_{Max}$ can be minimized by selecting a capacitor with capacitance (point B) with which the auxiliary winding current $I_{Aux}$ in the no-load state in the traction operation calculated with Math. 24 is equal to that in the idling operation calculated with Math. 65. However, it is general that the capacitor capacitances are lined up in increments of several tens of percentages. Thus, a capacitor with the capacitance corresponding with point B cannot necessarily be obtained. In this case, a capacitor with capacitance closest to that of point B among the lined-up capacitor capacitances is selected. In this manner, the maximum auxiliary winding current $I_{Max}$ becomes small, and the capacity of the converter 7 can be made low. A relationship of the following formula is obtained when a capacitor with the capacitance (point B) with which the auxiliary winding current $I_{Aux}$ in the no-load state in the traction operation calculated with Math. 24 is equal to that in the idling operation calculated with Math. 65 is selected.

[Math. 72]

$$\sqrt{P_{gAuxTN}^2 + Q_{gAuxTN}^2} \Big/ \left(\sqrt{3}\ V_{Max}\right) = \sqrt{\frac{2}{3}} \sqrt{\frac{P_{gAuxI}\left(\frac{1}{\omega_I \times L_M} - \omega_I \times C\right)}{K_V}}$$

As the capacitor capacitance increases from 0 toward point A and from point A toward point B, the maximum auxiliary winding current $I_{Max}$ decreases. The decrease rate (slope) of the maximum auxiliary winding current $I_{Max}$ is higher in the section from 0 to point A than in the section from point A to point B. Therefore, by selecting the capacitor 11 with capacitance lower than capacitance (point A) with which the auxiliary winding current $I_{Aux}$ in the rated state in the traction operation calculated with Math. 16 is equal to that in the idling operation calculated with Math. 65, the maximum auxiliary winding current $I_{Max}$ can be efficiently made small, and the capacity of the converter 7 can be made low. A relationship of the following formula is obtained when the capacitor 11 with capacitance lower than the capacitance (point A) with which the auxiliary winding current $I_{Aux}$ in the rated state in the traction operation calculated with Math. 16 is equal to that in the idling operation calculated with Math. 65 is selected.

[Math. 73]

$$\sqrt{P_{gAuxTR}^2 + Q_{gAuxTR}^2} \Big/ \left(\sqrt{3}\ V_{Rat}\right) > \sqrt{\frac{2}{3}} \sqrt{\frac{P_{gAuxI}\left(\frac{1}{\omega_I \times L_M} - \omega_I \times C\right)}{K_V}}$$

In the section from point A to point B, the auxiliary winding current $I_{Aux}$ in the idling operation is the maximum auxiliary winding current $I_{Max}$. At this time, the maximum auxiliary winding current $I_{Max}$ becomes substantially the minimum, and the capacity of the converter 7 can be made low. A relationship of the following formula is obtained when the capacitor 11 with capacitance with which the auxiliary winding current $I_{Aux}$ in the idling operation calculated with Math. 65 is the maximum auxiliary winding current $I_{Max}$ is selected.

[Math. 74]

$$\sqrt{\frac{2}{3}} \sqrt{\frac{P_{gAuxI}\left(\frac{1}{\omega_I \times L_M} - \omega_I \times C\right)}{K_V}} = I_{Max}$$

As described above, the capacity of the converter 7 can be made low by setting the capacitor 11 with appropriate capacitance. Meanwhile, when reactive power supplied to the main winding 2131 of the induction generator 2 in the rated state in the traction operation is defined as $Q_{gMainTR}$, capacity $S_{gTR}$ of the induction generator 2 in the rated state in the traction operation is represented by the following formula.

[Math. 75]

$$S_{gTR} = \sqrt{P_{gMainTR}^2 + Q_{gMainTR}^2} + \sqrt{P_{gAuxTR}^2 + Q_{gAuxTR}^2}$$

The reactive power $Q_{gMainTR}$ supplied to the main winding 2131 of the induction generator 2 in the rated state in the traction operation is represented by the following formula.

[Math. 76]

$$Q_{gMainTR} = Q_{gTR} - Q_{gAuxTR}$$

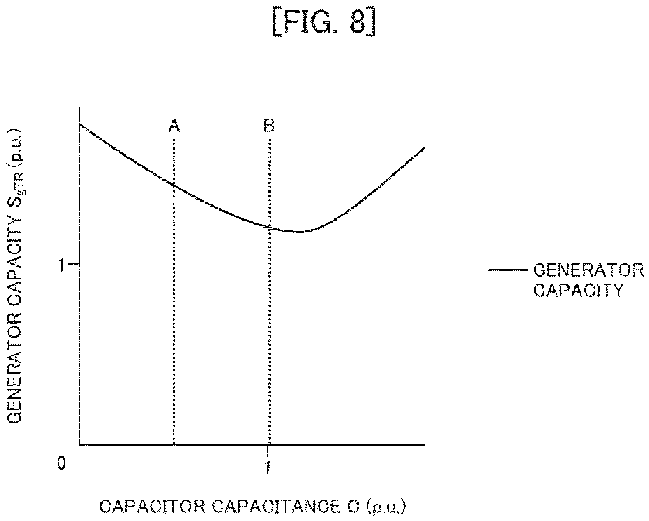

Fig. 8 is a diagram depicting a relationship between the generator capacity of the two-winding squirrel-cage induction generator 2 in the rated state in the traction operation (in the traction rated operation) and the capacitor capacitance. The generator capacity is calculated with Math. 75. For the generator capacity, the rated output power of the main winding 2131 in the traction operation is employed as the basis (1.0 pu) of the pu unit system. Line A and line B in Fig. 8 indicate the capacitor capacitances of point A and point B in Fig. 7.

As described above with Fig. 7, the maximum auxiliary winding current $I_{Max}$ can be minimized by selecting a capacitor of line B. At this time, the generator capacity in Fig. 8 becomes lower than that when the capacitor capacitance is 0. When the generator capacity becomes lower, the size and the weight of the generator are reduced. Thus, it becomes possible to increase the load capacity of the electrically driven dump truck 500 and improve the flexibility of layout with other pieces of equipment.

As described above with Fig. 7, the maximum auxiliary winding current $I_{Max}$ can be efficiently made small by selecting a capacitor with capacitor capacitance that is higher than 0 and is lower than that of line A. At this time, the generator capacity in Fig. 8 becomes lower than that when the capacitor capacitance is 0. When the generator capacity becomes lower, the size and the weight of the generator are reduced. Thus, it becomes possible to increase the load capacity of the electrically driven dump truck 500 and improve the flexibility of layout with other pieces of equipment.

As described above with Fig. 7, the maximum auxiliary winding current $I_{Max}$ can be substantially minimized by selecting a capacitor of the section from line A to line B. At this time, the generator capacity in Fig. 8 becomes lower than that when the capacitor capacitance is 0. When the generator capacity becomes lower, the size and the weight of the generator are reduced. Thus, it becomes possible to increase the load capacity of the electrically driven dump truck 500 and improve the flexibility of layout with other pieces of equipment.

Even if the capacitor 11 is disposed on the converter side, the generator capacity does not become low. However, the capacity of the induction generator 2 can be made low by disposing the capacitor 11 on the side of the diode bridge 3 as in the present embodiment. By making the generator capacity low, the size and the weight of the induction generator 2 are reduced. Thus, the load capacity of the electrically driven dump truck 500 increases, and the flexibility of layout with other pieces of equipment improves.

In the first embodiment, in the power generation system 508 including the induction generator 2 having the primary winding 213 including the main winding 2131 and the auxiliary winding 2132, and the secondary conductor 223. In the first embodiment, in the power generation system 508 including the diode bridge 3 that is connected to the main winding 2131 and converts AC power generated in the main winding 2131 to DC power, and the converter 7 that is connected to the auxiliary winding 2132, excites the induction generator 2, and converts an AC voltage generated in the auxiliary winding 2132 to a DC voltage, the capacitor 11 that is connected to the primary winding 213 of the induction generator 2 and supplies reactive power to the induction generator 2 is included, and the capacitor 11 is connected to the main winding 2131 in parallel to the diode bridge 3.

According to the first embodiment configured as described above, the reactive power required for excitation and generation of leakage magnetic flux in the two-winding squirrel-cage induction generator 2 can be supplied from the capacitor 11 to the primary winding 213. Thus, the capacity of the converter 7 can be made low. Moreover, the capacity of the induction generator 2 can be made low by connecting the capacitor 11 to the main winding 2131 in parallel to the diode bridge 3.

Further, the electrically driven dump truck 500 in the first embodiment includes the power generation system 508, the travelling motor 5, the auxiliary machinery motor 9, the travelling inverter 4 that converts the DC power output from the diode bridge 3 to AC power and supplies the AC power to the travelling motor 5, and the auxiliary machinery inverter 8 that converts DC power output from the converter 7 to AC power and supplies the AC power to the auxiliary machinery motor 9. Due to this, the capacity of the converter 7 can be made low in the power generation system 508 mounted in the electrically driven dump truck 500.

Moreover, in the power generation system 508 in the first embodiment, the capacitance of the capacitor 11 is selected such that the current of the auxiliary winding 2132 becomes the maximum at the time of the traction rated operation in which the voltage and the output power of the main winding 2131 are a rated voltage and rated output power and the frequency becomes the maximum (range lower than the capacitance of point A in Fig. 7) among the time of the traction rated operation, the time of the traction no-load operation in which the voltage of the main winding 2131 and the frequency are the maximum and no-load operation is executed, the time of the idling operation in which the voltage of the main winding 2131 and the frequency become the minimum, and the time of the retard operation in which the travelling motor 5 executes regenerative operation. This can efficiently make the capacity of the converter 7 low.

Further, in the power generation system 508 in the first embodiment, the capacitance of the capacitor 11 is selected such that the current of the auxiliary winding 2132 at the time of the idling operation among the time of the traction rated operation, the time of the traction no-load operation, the time of the idling operation, and the time of the retard operation becomes the maximum (between point A and point B in Fig. 7). This can substantially minimize the capacity of the converter 7.

Moreover, in the power generation system 508 in the first embodiment, the capacitance of the capacitor 11 is selected such that the current of the auxiliary winding 2132 at the time of the idling operation is equal to the current of the auxiliary winding 2132 at the time of the traction no-load operation (point B in Fig. 7). This can minimize the capacity of the converter 7.

[Second Embodiment]

A second embodiment of the present invention is described with focus on a difference from the first embodiment.

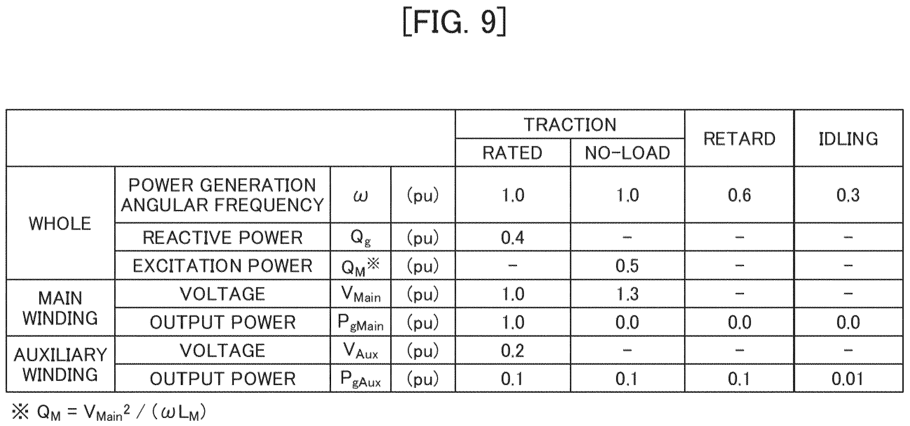

Fig. 9 is a diagram indicating specifications demanded for the induction generator 2 according to the second embodiment. The output power of the auxiliary winding 2132 in the idling operation is 0.01 pu in the present embodiment, whereas this output power is 0.1 pu in the first embodiment.

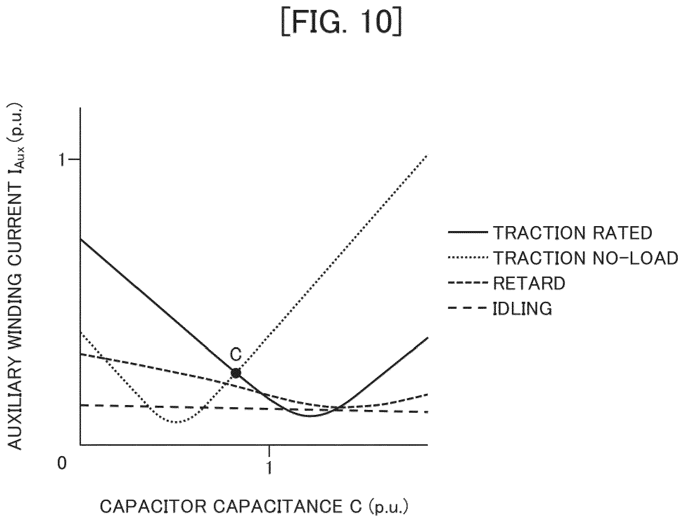

Fig. 10 is a diagram depicting a relationship between the auxiliary winding current $I_{Aux}$ and the capacitor capacitance in each operation mode of the electrically driven dump truck 500 according to the second embodiment. The difference from the first embodiment is the auxiliary winding current $I_{Aux}$ in the idling operation.

The maximum auxiliary winding current $I_{Max}$ is the auxiliary winding current $I_{Aux}$ in the rated state in the traction operation when the capacitor capacitance is lower than that of point C, and is the auxiliary winding current $I_{Aux}$ in the no-load state in the traction operation when the capacitor capacitance is higher than that of point C.

The maximum auxiliary winding current $I_{Max}$ becomes the minimum at point C. Thus, the maximum auxiliary winding current $I_{Max}$ can be minimized by selecting a capacitor with capacitance (point C) with which the auxiliary winding current $I_{Aux}$ in the rated state in the traction operation calculated with Math. 16 is equal to that in the no-load state in the traction operation calculated with Math. 24. However, it is general that the capacitor capacitances are lined up in increments of several tens of percentages. Thus, a capacitor with the capacitance corresponding with point B cannot necessarily be obtained. In this case, a capacitor with capacitance closest to that of point C among the lined-up capacitor capacitances is selected. In this manner, the maximum auxiliary winding current $I_{Max}$ becomes small, and the capacity of the converter 7 can be made low. A relationship of the following formula is obtained when the capacitor 11 with the capacitance (point C) with which the auxiliary winding current $I_{Aux}$ in the rated state in the traction operation calculated with Math. 16 is equal to that in the no-load state in the traction operation calculated with Math. 24 is selected.

[Math. 77]

$$\sqrt{P_{gAuxTR}^{2} + Q_{gAuxTR}^{2}} \Big/ \left(\sqrt{3}\, V_{Rat}\right)$$

$$= \sqrt{P_{gAuxTN}^{2} + Q_{gAuxTN}^{2}} \Big/ \left(\sqrt{3}\, V_{Max}\right)$$

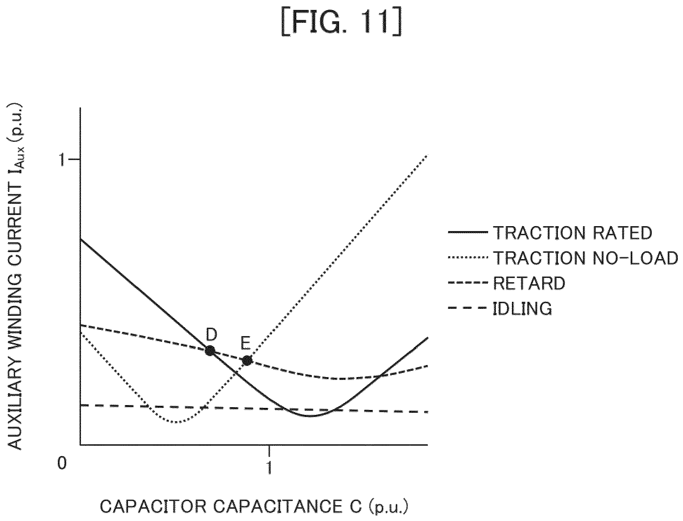

In a case in which, relative to the specifications of Fig. 9, the frequency in the retard operation is low or the output power of the auxiliary winding 2132 in the retard operation is high, as depicted in Fig. 11, a section in which the auxiliary winding current $I_{Aux}$ in the retard operation is the maximum auxiliary winding current $I_{Max}$ (from point D to point E) sometimes occurs. In this case, by selecting the capacitor capacitance corresponding to the section, the maximum auxiliary winding current $I_{Max}$ becomes substantially the minimum, and the capacity of the converter 7 can be made low. A relationship of the following formula is obtained when the capacitor 11 with capacitance with which the auxiliary winding current $I_{Aux}$ in the retard operation calculated with Math. 43 is the maximum auxiliary winding current $I_{Max}$ is selected.

[Math. 78]

$$\sqrt{\frac{2}{3}}\; \frac{\sqrt{P_{gAuxR}\left(\frac{1}{\omega_{R} \times L_{M}} - \omega_{R} \times C\right)}}{K_{V}} = I_{Max}$$

In the power generation system 508 in the second embodiment, the capacitance of the capacitor 11 is selected such that the current of the auxiliary winding 2132 at the time of the traction rated operation is equal to the current of the auxiliary winding 2132 at the time of the traction no-load operation (point C in Fig. 10).

According to the second embodiment configured as described above, the capacity of the converter 7 can be made low similarly to the first embodiment. Further, the capacity of the converter 7 can be minimized by selecting the capacitance of the capacitor 11 such that the current of the auxiliary winding 2132 in the traction rated operation is equal to that in the traction no-load operation.

Moreover, in the electrically driven dump truck 500 in the second embodiment, the capacitance of the capacitor 11 is selected such that the current of the auxiliary winding 2132 at the time of the retard operation among the time of the traction rated operation, the time of the traction no-load operation, the time of the idling operation, and the time of the retard operation becomes the maximum (between point D and point E in Fig. 11). This can substantially minimize the capacity of the converter 7.

[Third Embodiment]

A third embodiment of the present invention is described with focus on a difference from the first embodiment.

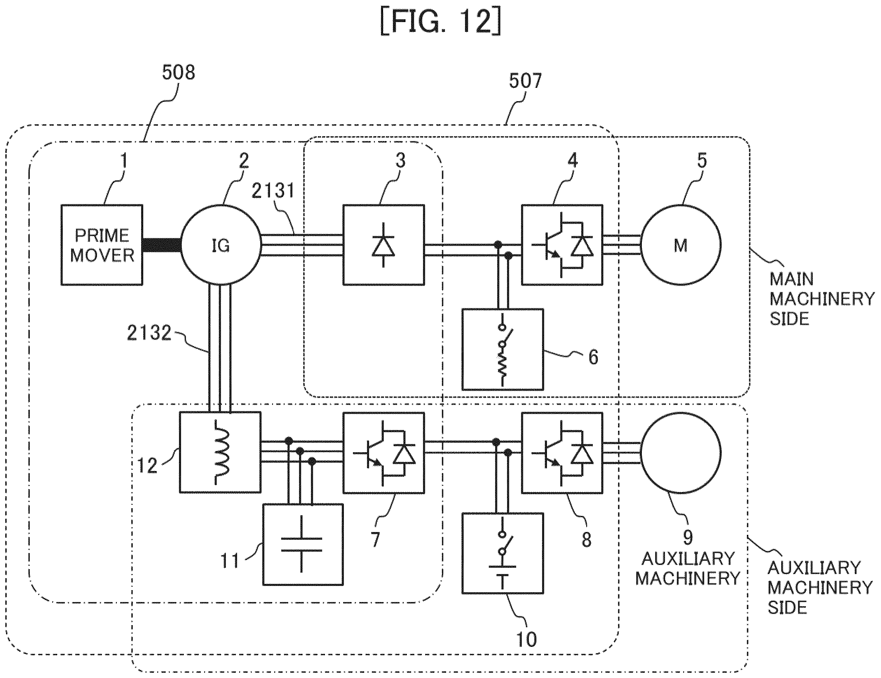

Fig. 12 is a configuration diagram of the drive system mounted in the electrically driven dump truck 500 according to the third embodiment. In the present embodiment, the capacitor 11 is connected to the AC-side terminal of the converter 7, and a reactor 12 is disposed in series at a portion that connects the induction generator 2 to the capacitor 11 in the auxiliary winding 2132.

Reactive power required for excitation and generation of leakage magnetic flux in the induction generator 2 is supplied from the capacitor 11 to the auxiliary winding 2132. Therefore, the reactive power required to be supplied from the converter 7 becomes low, and the capacity of the converter 7 can be made low. Further, because the capacitor 11 is connected to the AC-side terminal of the converter 7, a jump in the current occurs in the capacitor 11. However, the capacitor 11 is connected to the induction generator 2 through the reactor 12, and thus the jump in the current flowing into the induction generator 2 is suppressed.

In the third embodiment, in the power generation system 508 including the induction generator 2 having the primary winding 213 including the main winding 2131 and the auxiliary winding 2132, and the secondary conductor 223. In the third embodiment, in the power generation system 508 including the diode bridge 3 that is connected to the main winding 2131 and converts AC power generated in the main winding 2131 to DC power, and the converter 7 that is connected to the auxiliary winding 2132, excites the induction generator 2, and converts an AC voltage generated in the auxiliary winding 2132 to a DC voltage, the capacitor 11 that is connected to the primary winding 213 of the induction generator 2 and supplies reactive power to the induction generator 2 is included, and the capacitor 11 is connected to the auxiliary winding 2132 in parallel to the converter 7.

According to the third embodiment configured as described above, the capacity of the converter 7 can be made low similarly to the first embodiment. Moreover, due to the connection of the capacitor 11 to the auxiliary winding 2132 in parallel to the converter 7, the reactive power required for excitation and generation of leakage magnetic flux in the induction generator 2 can be supplied from the capacitor 11 to the auxiliary winding 2132. Thus, the capacity of the converter 7 can be made low.

Further, the power generation system 508 in the third embodiment includes the reactor 12 disposed in series at the portion that connects the induction generator 2 to the capacitor 11 in the auxiliary winding 2132. Thus, the capacitor 11 is connected to the induction generator 2 through the reactor 12. Therefore, it becomes possible to suppress the flowing of the jump in the current caused in the capacitor 11 into the induction generator 2.

[Fourth Embodiment]

A fourth embodiment of the present invention is described with focus on a difference from the third embodiment.

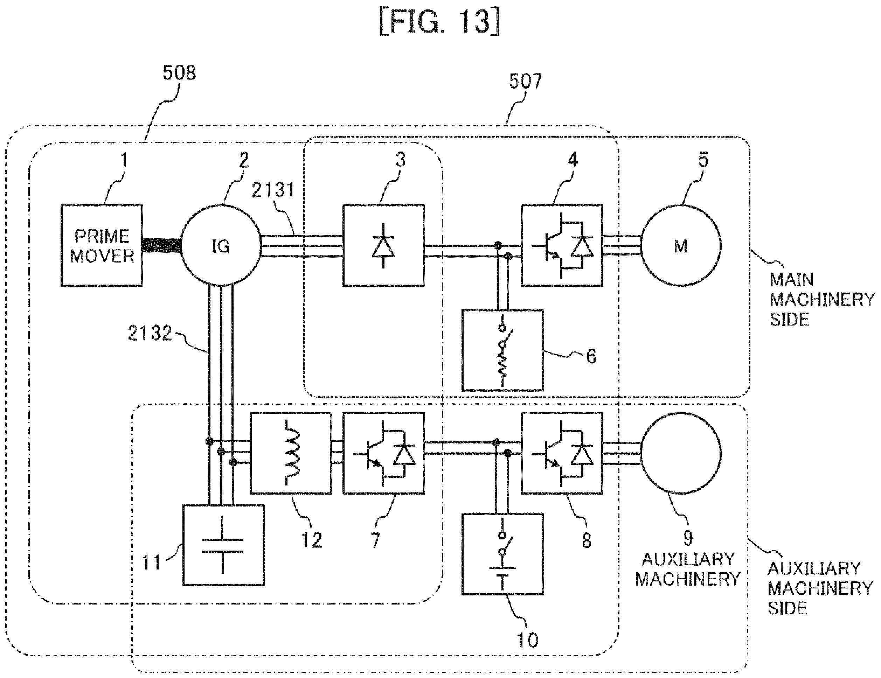

Fig. 13 is a configuration diagram of the drive system mounted in the electrically driven dump truck 500 according to the fourth embodiment. The present embodiment is different from the third embodiment in that the AC-side terminal of the converter 7 is connected only to the reactor 12 and the capacitor 11 is connected to the reactor 12 and the induction generator 2.

Reactive power required for excitation and generation of leakage magnetic flux in the induction generator 2 is supplied from the capacitor 11 to the auxiliary winding 2132. Therefore, the reactive power required to be supplied from the converter 7 becomes low, and the capacity of the converter 7 can be made low. Moreover, the AC-side terminal of the converter 7 is connected to the capacitor 11 through the reactor 12, and thus a jump in the current caused in the capacitor 11 is suppressed.

The power generation system 508 in the fourth embodiment includes the reactor 12 disposed in series at a portion that connects the converter 7 to the capacitor 11 in the auxiliary winding 2132.

According to the fourth embodiment configured as described above, the capacity of the converter 7 of the power generation system 508 can be made low similarly to the third embodiment. Further, the capacitor 11 is connected to the converter 7 through the reactor 12, and thus it becomes possible to suppress the jump in the current caused in the capacitor 11.

[Fifth Embodiment]

A fifth embodiment of the present invention is described with focus on a difference from the third and fourth embodiments.

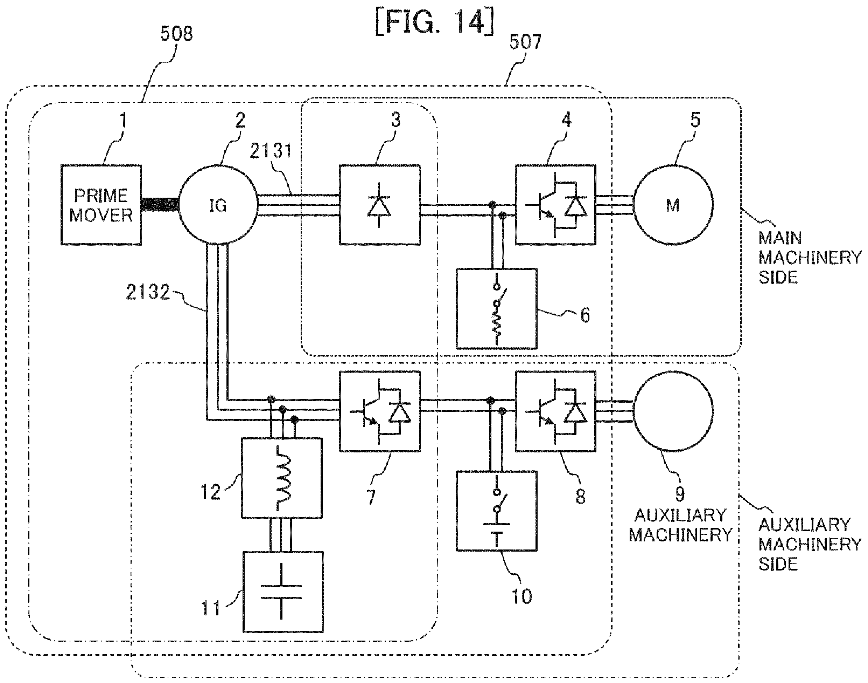

Fig. 14 is a configuration diagram of the drive system mounted in the electrically driven dump truck 500 according to the fifth embodiment. The present embodiment is different from the third and fourth embodiments in that the capacitor 11 is connected only to the reactor 12 and the AC-side terminal of the converter 7 is connected to the reactor 12 and the induction generator 2.

Reactive power required for excitation and generation of leakage magnetic flux in the induction generator 2 is supplied from the capacitor 11 to the auxiliary winding 2132. Therefore, the reactive power required to be supplied from the converter 7 becomes low, and the capacity of the converter 7 can be made low. Moreover, the AC-side terminal of the converter 7 is connected to the capacitor 11 through the reactor 12, and thus a jump in the current caused in the capacitor 11 is suppressed. Further, the converter 7 is connected to the induction generator 2 without through the reactor 12. Thus, it is sufficient that the reactor 12 be one with such capacity as to be capable of suppressing the jump in the current only in a reactive current, and the capacity of the reactor 12 can be made low.

The power generation system 508 in the fifth embodiment includes the reactor 12 disposed in series at a portion that connects the induction generator 2 to the capacitor 11 in the auxiliary winding 2132 or a portion that connects the converter 7 to the capacitor 11 in the auxiliary winding 2132.

[Sixth Embodiment]

A sixth embodiment of the present invention is described with focus on a difference from the first and second embodiments.

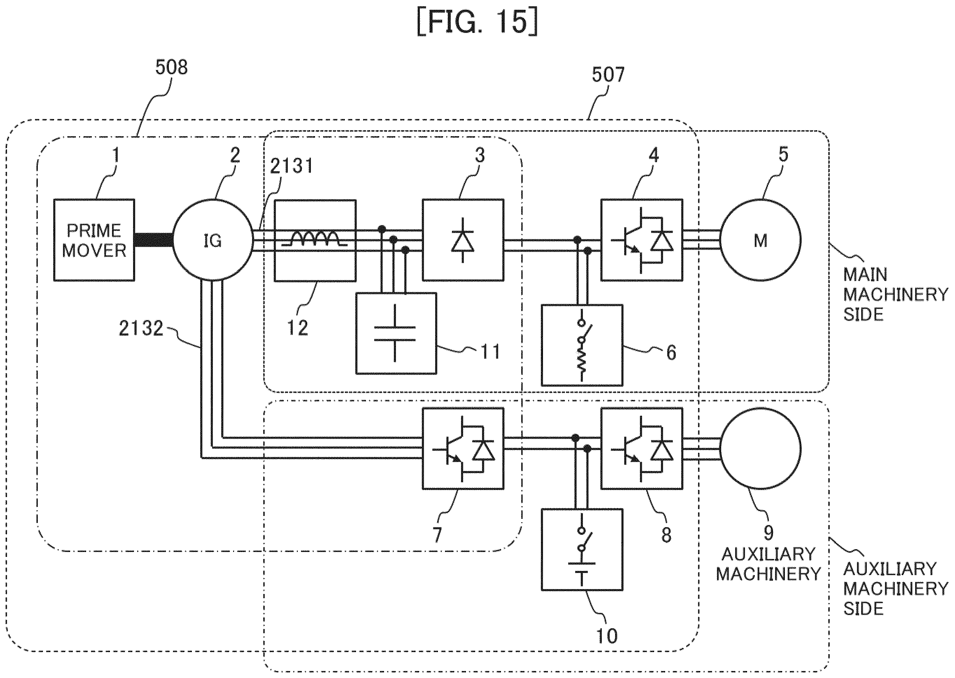

Fig. 15 is a configuration diagram of the drive system mounted in the electrically driven dump truck 500 according to the sixth embodiment. In the present embodiment, the reactor 12 is disposed in series at a portion that connects the induction generator 2 to the capacitor 11 in the main winding 2131.

The capacitor 11 is connected to the AC-side terminal of the diode bridge 3, and thus a jump in the current occurs in the capacitor 11. However, the capacitor 11 is connected to the induction generator 2 through the reactor 12, and thus the jump in the current flowing into the induction generator 2 is suppressed.

According to the sixth embodiment configured as described above, the capacity of the converter 7 can be made low similarly to the first or second embodiment. Moreover, because the capacitor 11 is connected to the induction generator 2 through the reactor 12, it becomes possible to suppress the flowing of the jump in the current caused in the capacitor 11 into the induction generator 2.

Although the embodiments of the present invention have been described in detail above, the present invention is not limited to the above-described embodiments and various modifications are included therein. For example, the above-described embodiments have been explained in detail in order to explain the present invention in an easy-to-understand manner, and the present invention is not necessarily limited to that including all configurations explained. Further, it is also possible to add part of a configuration of a certain embodiment to a configuration of another embodiment. It is also possible to delete part of a configuration of a certain embodiment or replace the part by part of another embodiment.

Description of Reference Characters

1: prime mover
2: induction generator
3: diode bridge (rectifier)
4: travelling inverter
5: travelling motor
6: regenerative discharge resistor
7: converter
8: auxiliary machinery inverter
9: auxiliary machinery motor

10: starting battery
11: capacitor
12: reactor
21: stator
22: rotor
23: gap
211: stator iron core
212: stator slot
213: primary winding
2131: main winding
2132: auxiliary winding
214: wedge
221: rotor iron core
222: rotor slot
223: secondary conductor
2231: rotor bar
2232: end ring
500: electrically driven dump truck
501: vehicle body frame
502: pin joining portion
503: body
504L, 504R: driven wheel
505L, 505R: drive wheel
506: operation seat
507: drive system
508: power generation system

**Claims**

1.  A power generation system comprising:

    an induction generator having a primary winding including a main winding and an auxiliary winding, and a secondary conductor;
    a rectifier that is connected to the main winding and converts alternating-current power generated in the main winding to direct-current power; and
    a converter that is connected to the auxiliary winding, excites the induction generator, and converts an alternating-current voltage generated in the auxiliary winding to a direct-current voltage, wherein
    the power generation system includes a capacitor that is connected to the primary winding of the induction generator and supplies reactive power to the induction generator, and
    the capacitor is connected to the main winding in parallel to the rectifier.

2.  A power generation system comprising:

    an induction generator having a primary winding including a main winding and an auxiliary winding, and a secondary conductor;
    a rectifier that is connected to the main winding and converts alternating-current power generated in the main winding to direct-current power; and
    a converter that is connected to the auxiliary winding, excites the induction generator, and converts an alternating-current voltage generated in the auxiliary winding to a direct-current voltage, wherein
    the power generation system includes a capacitor that is connected to the primary winding of the induction generator and supplies reactive power to the induction generator, and
    the capacitor is connected to the auxiliary winding in parallel to the converter.

3.  The power generation system according to claim 2, wherein
    the power generation system includes a reactor disposed in series at a portion that connects the induction generator to the capacitor in the auxiliary winding.

4. The power generation system according to claim 2, wherein
   the power generation system includes a reactor disposed in series at a portion that connects the converter to the capacitor in the auxiliary winding.

5. An electrically driven dump truck comprising:

   the power generation system according to claim 1 or 2;
   a travelling motor;
   an auxiliary machinery motor;
   a travelling inverter that converts the direct-current power output from the rectifier to alternating-current power and supplies the alternating-current power to the travelling motor; and
   an auxiliary machinery inverter that converts direct-current power output from the converter to alternating-current power and supplies the alternating-current power to the auxiliary machinery motor.

6. The electrically driven dump truck according to claim 5, wherein
   capacitance of the capacitor is selected such that a current of the auxiliary winding becomes maximum at a time of traction rated operation in which a voltage and output power of the main winding are a rated voltage and rated output power and a frequency becomes maximum, among the time of the traction rated operation, a time of traction no-load operation in which the voltage of the main winding and the frequency are maximum and no-load operation is executed, a time of idling operation in which the voltage of the main winding and the frequency become minimum, and a time of retard operation in which the travelling motor executes regenerative operation.

7. The electrically driven dump truck according to claim 6, wherein
   the capacitance of the capacitor is selected such that the current of the auxiliary winding at the time of the traction rated operation is equal to a current of the auxiliary winding at the time of the traction no-load operation.

8. The electrically driven dump truck according to claim 5, wherein
   capacitance of the capacitor is selected such that a current of the auxiliary winding becomes maximum at a time of idling operation in which a voltage of the main winding and a frequency become minimum or at a time of retard operation in which the travelling motor executes regenerative operation, among a time of traction rated operation in which the voltage and output power of the main winding are a rated voltage and rated output power and the frequency becomes maximum, a time of traction no-load operation in which the voltage of the main winding and the frequency are maximum and no-load operation is executed, the time of the idling operation, and the time of the retard operation.

9. The electrically driven dump truck according to claim 8, wherein
   the capacitance of the capacitor is selected such that the current of the auxiliary winding at the time of the idling operation is equal to a current of the auxiliary winding at the time of the traction no-load operation.

10. The power generation system according to claim 1, wherein
    the power generation system includes a reactor disposed in series at a portion that connects the induction generator to the capacitor in the main winding.

[FIG. 1]

[FIG. 2]

[FIG. 3]

ENLARGED VIEW OF SECTION OF A-A PORTION

EP 4 668 569 A1

[FIG. 4]

[FIG. 5]

[FIG. 6]

| | | | | TRACTION | | RETARD | IDLING |
|---|---|---|---|---|---|---|---|
| | | | | RATED | NO-LOAD | | |
| WHOLE | POWER GENERATION ANGULAR FREQUENCY | $\omega$ | (pu) | 1.0 | 1.0 | 0.6 | 0.3 |
| | REACTIVE POWER | $Q_g$ | (pu) | 0.4 | – | – | – |
| | EXCITATION POWER | $Q_M$※ | (pu) | – | 0.5 | – | – |
| MAIN WINDING | VOLTAGE | $V_{Main}$ | (pu) | 1.0 | 1.3 | – | – |
| | OUTPUT POWER | $P_{gMain}$ | (pu) | 1.0 | 0.0 | 0.0 | 0.0 |
| AUXILIARY WINDING | VOLTAGE | $V_{Aux}$ | (pu) | 0.2 | – | – | – |
| | OUTPUT POWER | $P_{gAux}$ | (pu) | 0.1 | 0.1 | 0.1 | 0.1 |

※ $Q_M = V_{Main}^2 / (\omega L_M)$

EP 4 668 569 A1

[FIG. 7]

[FIG. 8]

[FIG. 9]

| | | | | TRACTION | | RETARD | IDLING |
|---|---|---|---|---|---|---|---|
| | | | | RATED | NO-LOAD | | |
| WHOLE | POWER GENERATION ANGULAR FREQUENCY | $\omega$ | (pu) | 1.0 | 1.0 | 0.6 | 0.3 |
| | REACTIVE POWER | $Q_g$ | (pu) | 0.4 | − | − | − |
| | EXCITATION POWER | $Q_M$※ | (pu) | − | 0.5 | − | − |
| MAIN WINDING | VOLTAGE | $V_{Main}$ | (pu) | 1.0 | 1.3 | − | − |
| | OUTPUT POWER | $P_{gMain}$ | (pu) | 1.0 | 0.0 | 0.0 | 0.0 |
| AUXILIARY WINDING | VOLTAGE | $V_{Aux}$ | (pu) | 0.2 | − | − | − |
| | OUTPUT POWER | $P_{gAux}$ | (pu) | 0.1 | 0.1 | 0.1 | 0.01 |

※ $Q_M = V_{Main}^2 / (\omega L_M)$

EP 4 668 569 A1

[FIG. 10]

# [FIG. 11]

[FIG. 12]

[FIG. 13]

[FIG. 14]

EP 4 668 569 A1

# [FIG. 15]

EP 4 668 569 A1

## INTERNATIONAL SEARCH REPORT

| International application No. |
|---|
| **PCT/JP2024/009819** |

### A. CLASSIFICATION OF SUBJECT MATTER

*H02P 9/04*(2006.01)i; *B60L 7/14*(2006.01)i; *B60L 9/18*(2006.01)i; *B60L 50/10*(2019.01)i
FI:    H02P9/04 J; B60L7/14; B60L9/18 J; B60L50/10

According to International Patent Classification (IPC) or to both national classification and IPC

### B. FIELDS SEARCHED

Minimum documentation searched (classification system followed by classification symbols)

H02P9/04; B60L7/14; B60L9/18; B60L50/10

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | WO 2022/209413 A1 (HITACHI CONSTRUCTION MACHINERY CO., LTD.) 06 October 2022 (2022-10-06)<br>paragraphs [0001]-[0181], fig. 1-8 | 1-5, 10 |
| A | | 6-9 |
| Y | JP 64-77428 A (NIHON SEIMITSU KEISOKU KK) 23 March 1989 (1989-03-23)<br>p. 3, upper right column, line 11 to lower right column, line 4, fig. 1 | 1-5, 10 |
| Y | JP 6-276688 A (NISHISHIBA ELECTRIC CO., LTD.) 30 September 1994 (1994-09-30)<br>paragraph [0011], fig. 2 | 3-4, 10 |
| A | JP 2009-33798 A (FUJI ELECTRIC SYSTEMS CO., LTD.) 12 February 2009 (2009-02-12)<br>paragraphs [0001]-[0040], fig. 1-9 | 1-10 |

☐ Further documents are listed in the continuation of Box C.          ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **09 April 2024** | **14 May 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/009819**

| Patent document cited in search report | Publication date (day/month/year) | Patent family member(s) | Publication date (day/month/year) |
|---|---|---|---|
| WO 2022/209413 A1 | 06 October 2022 | US 2023/0370008 A1 paragraphs [0001]-[0132], fig. 1-8 CN 116075445 A | |
| JP 64-77428 A | 23 March 1989 | (Family: none) | |
| JP 6-276688 A | 30 September 1994 | (Family: none) | |
| JP 2009-33798 A | 12 February 2009 | (Family: none) | |

Form PCT/ISA/210 (patent family annex) (July 2022)

**REFERENCES CITED IN THE DESCRIPTION**

**Patent documents cited in the description**

- JP 7082700 B